(19) Europäisches Patentamt
European Patent Office
Office européen des brevets

(11) Veröffentlichungsnummer: **0 002 241**
**B1**

# (12) EUROPÄISCHE PATENTSCHRIFT

(45) Veröffentlichungstag der Patentschrift: **20.01.82**

(51) Int. Cl.$^3$: **G 11 B 5/70**, C 08 G 18/66

(21) Anmeldenummer: **78101454.3**

(22) Anmeldetag: **25.11.78**

## (54) Magnetische Aufzeichnungsträger mit Polyurethanelastomer-Bindemitteln in der Magnetschicht.

(30) Priorität: **02.12.77 DE 2753694**

(43) Veröffentlichungstag der Anmeldung:
**13.06.79 Patentblatt 79/12**

(45) Bekanntmachung des Hinweises auf die Patenterteilung:
**20.01.82 Patentblatt 82/3**

(84) Benannte Vertragsstaaten:
**DE FR GB NL**

(56) Entgegenhaltungen:
**DE - A - 2 442 762**
**US - A - 3 926 826**

(73) Patentinhaber: **BASF Aktiengesellschaft**
**Carl-Bosch-Strasse 38**
**D-6700 Ludwigshafen (DE)**

(72) Erfinder: **Motz, Herbert, Dr.**
**Beethovenstrasse 5**
**D-6711 Beindersheim (DE)**
Erfinder: **Lehner, August**
**Wachenheimer Strasse 4**
**D-6701 Roedersheim-Gronau 1 (DE)**
Erfinder: **Hartmann, Heinrich, Dr.**
**Weinheimer Strasse 46**
**D-6703 Limburgerhof (DE)**
Erfinder: **Bachmann, Rudolf, Dr.**
**Winklerstrasse 12**
**D-6710 Frankenthal (DE)**
Erfinder: **Hartmann, Hans-Joerg, Dr.**
**Bahnhofstrasse 62a**
**D-6713 Freinsheim (DE)**
Erfinder: **Frischmann, Harald, Dr.**
**Strassburger Strasse 3**
**D-7601 Willstaett (DE)**
Erfinder: **Falk, Roland, Dr.**
**Hohbuehl 51**
**D-7590 Achern (DE)**
Erfinder: **Hack, Joachim**
**Pfarrer-Friedrich-Strasse 34**
**D-6700 Ludwigshafen (DE)**
Erfinder: **Velic, Milan, Dr.**
**Berliner Strasse 21**
**D-6700 Ludwigshafen (DE)**
Erfinder: **Kopke, Helmut**
**Lisztstrasse 117**
**D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 241 B1

# Magnetische Aufzeichnungsträger mit Polyurethanelastomer-Bindemitteln in der Magnetischicht

Die Erfindung betrifft magnetische Aufzeichnungsträger aus einem nichtmagnetischen Trägermaterial, das mit einer Magnetschicht auf der Basis von in einem mindestens zu 50 Gew.% aus einem thermoplastischen durch Polyaddition eines Polyesterols, eines aliphatischen Diols, eines Polyols und eines Diisocyanats in einem mit Isocyanatgruppen nicht reagierenden organischen Lösungsmittel erhaltenen Polyurethans bestehenden Bindemittel dispergierten feinteiligen Magnetpigment versehen ist.

Magnetische Aufzeichnungsträger sind zur Aufnahme und Wiedergabe von Ton, Bild und Daten in Anwendung. Die ständig steigenden Anforderungen, welche an diese Aufzeichnungsträger gestellt werden, machen weitere Verbesserungen in mechanischer und elektromagnetischer Hinsicht nötig. So erfordert die Entwicklung in Richtung höherer Aufzeichnungsdichten bei allen genannten Anwendungsformen die Herstellung immer dünnerer Magnetschichten. Aus diesem Grunde muß sowohl die Packungsdichte des magnetischen Materials in der Magnetschicht, die remanente Magnetisierung in Aufzeichnungsrichtung, die gleichmäßige Verteilung des magnetischen Materials in der Schicht sowie die Oberflächenglätte und die Gleichmäßigkeit der Schicht in hohem Maße verbessert werden. Bereits kleine Schichtinhomogenitäten, wie Krater oder Verdickungen führen zu unzulässigen Verlusten an Informationen. Besonders Probleme werfen hierbei örtliche kleinere Verdickungen oder Verdünnungen der Magnetschicht auf, die zu sogenannten peak-shift-Fehlern, einer örtlichen und zeitlichen Verlagerung des Maximums des Ausgangssignales, Anlaß geben. Inhomogenitäten in der Oberfläche und Schwankungen in der Schichtdicke bewirken fernerhin eine unerwünschte Modulation des Ausgangssignales. Auch durch solche Modulation kann es zu Störungen in den einzelnen Anwendungsbereichen kommen. Alle diese Forderungen, die bei erhöhter Aufzeichnungsdichte hinsichtlich Fehlerfreiheit und Pegelkonstanz an die Magnetschicht gestellt werden, lassen sich außer durch den Dispergiergrad des magnetischen Pigments auch in hohem Maße von der Art des verwendeten Bindemittels beinflussen. Besonders wichtig ist es, daß das Bindemittel das Pigment gut benetzt, um eine völlig homogene Verteilung des Pigmentes zu erzielen, ferner daß es einen guten Verlauf an der Oberfläche zeigt, ein Umstand, der für den Erhalt glatter Oberflächen wichtig ist und daß das Bindemittel völlig frei von Partikeln ist, die infolge höheren Molekulargewichtes nicht mehr einwandfrei löslich sind, sondern vom Lösungsmittel nur noch mehr oder weniger angequollen werden.

Es ist bekannt, magnetische Aufzeichnungsträger, die hohen mechanischen Beanspruchungen ausgesetzt sind, mit Dispersionen der Magnetpigmente in Bindemitteln auf Basis von Polyurethanelastomeren oder von Abmischungen von Polyurethanelastomeren mit anderen Polymerbindemitteln als Magnetschicht herzustellen. Polyesterurethanelastomere, wie sie beispielsweise in der Deutschen Auslegeschrift 1 106 959 beschrieben sind, oder Polyätherurethanelastomere, wie sie in der US-Patentschrift 2 899 411 beschrieben sind, weisen bei Verwendung als alleinige Bindemittel für die Magnetschicht jedoch eine zu geringe Oberflächenhärte auf. Polyurethanelastomere der erwähnten Typen besitzen bei Verwendung als alleinige Bindemittel zudem den Nachteil, daß in ihren Lösungen dispergierte Magnetpartikel beim Durchlaufen eines Magnetfeldes nach der Beschichtung eine unbefriedigende Ausrichtung in der Folienlaufrichtung erfahren. Des weiteren sind derartige Produkte, die nach dem Schmelz polyadditions verfahren hergestellt sind, häufig nicht völlig frei von höhermolekularen, schlecht löslichen Bestandteilen, die in Magnetschichten Anlaß zu Schichtinhomogenitäten und Oberflächenstörungen sein können.

In der Patentliteratur existiert eine Anzahl von Vorschlägen, die Nachteile der niederen Schichthärte, die bei Verwendung von Polyurethanen als alleinige Bindemittel für die Magnetschicht auftreten, durch Zumischen eines weiteren Bindemittels zu beheben. Die Verbesserung der Schichthärte durch Zumischung eines Polyesters, wie es in der Deutschen Auslegeschrift 1 269 661 beschrieben ist, birgt jedoch die Gefahr des Verklebens einzelner Schichtlagen bei höheren Temperaturen und höherem Wickeldruck in sich. Die Abmischung von Polyurethanelastomeren mit höhermilekularen Phenoxyharzen, wie es die Deutsche Auslegeschrift 1 295 011 beschreibt, zeigt bis zu Temperaturen von etwa 65°C ausreichend befriedigende mechanische Eigenschaften, die Mitverwendung des Phenoxyharzes bewirkt jedoch eine Verschlechterung der Ausrichtbarkeit der magnetischen Teilchen längs ihrer magnetischen Vorzugsrichtung im Magnetfeld. Es ist auch bekannt, Gemische von Vinylchloridcopolymerisaten mit Polyurethanelastomeren als Bindemittel für Magnetischichten zu verwenden. So wird in der US-Patentschrift 3 144 352 beschrieben, Polyurethanelastomeren Vinylchlorid/Acrylnitrilcopolymerisate zuzusetzen, jedoch ist die relativ geringe thermische Stabilität der resultierenden Produkte nachteilig (vgl. hierzu Deutsche Offenlegungsschrift 2 037 605). Eine Kombination von Polyurethanelastomeren mit Vinylchlorid-Vinylacetat-Copolymerisaten als Bindemittel für Magnetschichten wird in der Deutschen Auslegeschrift 1 282 700 empfohlen, jedoch gewährleistet die Verwendung dieser Kombinationen nicht die von der Praxis für die Magnetschicht geforderten Eigenschaften bei erhöhten Temperaturen. Die Abmischung von Polyesterurethanen mit Polycarbonaten, wie sie in der Deutschen Offenlegungsschrift 2 114 611 vorgeschlagen wird, befriedigt nicht voll hinsichtlich der Viskosität der Lösung dieses Bindemittelgemisches.

Es wurde auch schon vorgeschlagen (US—A 3 149 995), das Polyurethanbindemittel direkt im

fertigen Beschichtungsgemisch, welches Magnetpigment, Präpolymeres und Lösungsmittel enthält, durch Zufügen eines Härters zu erzeugen. Bei diesem Vorgang bildet sich durch die Reaktion der Isocyanatgruppen des Präpolymeren mit den aktiven Wasserstoffatomen des Härters die endgültige Bindemittelmatrix. Nachteilig ist hierbei, daß infolge der raschen Anfangsreaktion Viskositätsschwankungen auftreten können, welche auch zu Inhomogenitäten in der Magnetschicht führen können.

In der DE—A 2 442 762 ist ebenfalls die Verwendung von thermoplastischen Polyurethanelastomeren bei der Herstellung von Magnetschichten beschrieben. Diese Polyurethane werden unter Einsatz verzweigtkettiger aliphatischer Diole in sog. Lösungsverfahren hergestellt. Bei einem solchen Verfahren ist die Kristallisation der Hartphase während der Polyaddition unmöglich. Dadurch wird bei entsprechend hergestellten Polyurethanelastomeren im Gegensatz zu den sonst üblicherweise durch Substanzpolymerisation gewonnenen Produkten die Verteilung der Hartphase in der Weichphase breiter, auch ist die Molekulargewichtsverteilung der Hartphase breiter und der mittlere Wert liegt höher. Diese Polyurethanelastomere eignen sich somit weniger für die Verwendung bei der Herstellung magnetischer Aufzeichnungsschichten, da sie eine zu große Härte aufweisen. Dieser Nachteil läßt sich jedoch nicht dadurch beheben, daß eine Kombination mit dem Verfahren gemäß der DE—A 11 06 959, welches Polyesterurethane mit einer für Magnetschichten zu geringen Oberflächenhärte liefert, erfolgt, da sich die Herstellverfahren, unter denen die Polyurethanbildung vonstatten geht, wesentlich unterscheiden und somit auch die Eigenschaften der resultierenden Produkte. Denn nach dem Verfahren gemäß der DE—A 11 06 959 führt Substanzpolyaddition zu den Polyurethan-Elastomeren. Hier läuft im Gegensatz zu dem Verfahren nach der DE—A 24 42 762 bei der Polyurethanbildung simultan zur Polyaddition eine Kristallisation ab, wobei die intermediär entstehenden Hartsegmente bereits in einem frühen Stadium, in welchem das System noch niedermolekular ist, auskristallisieren. Die noch vorhandenen Endgruppen reagieren im wesentlichen in einem dann folgenden Reaktionsschritt mit der Oberfläche der kristallisierten Hartsegmente unter Ausbildung des hochmolekularen Endprodukts.

Aufgabe der Erfindung war es daher, magnetische Aufzeichnungsträger mit geringer Dicke der Magnetschicht bereitzustellen, welche eine hervorragende Homogenität sowohl innerhalb der Magnetschicht wie auch an der Oberfläche besitzen und bei hohem Signalpegel eine ausgezeichnete Pegelkonstanz bei geringer Modulation des Ausgangssignals ergeben.

Es wurde nun gefunden, daß magnetische Aufzeichnungsträger aus einem nichtmagnetischen Trägermaterial, das mit einer Magnetschicht auf der Basis von in einem mindestens zu 50 Gew.% aus einem thermoplastischen durch Polyaddition eines Polyesterols, eines aliphatischen Diols, eines Polyols und eines Diisocyanats in einem mit Isocyanatgruppen nicht reagierenden organischen Lösungsmittel erhaltenen Polyurethan bestehenden Bindemittel dispergierten feinteiligen Magnetpigment versehen sind, die geforderten Eigenschaften besitzen, wenn das Polyurethan ein in Tetrahydrofuran lösliches, isocyanatgruppenfreies thermoplastisches Polyurethan darstellt, welches aus den Komponenten

A. 1 Mol eines Polyesterols mit einem Molekulargewicht zwischen 700 und 2 500,

B. 0,3 bis 3 Mol eines geradkettigen aliphatischen Dils mit 2 bis 10 Kohlenstoffatomen,

C. 0,05 bis 0,4 Mol eines Triols mit 3 bis 10 Kohlenstoffatomen und

D. 1,35 bis 4,7 Mol eines Diisocyanats mit 6 bis 30 Kohlenstoffatomen, wobei die Menge an NCO-Gruppen etwa äquivalent der Menge an OH-Gruppen der Summe der Komponenten A bis C ist, hergestellt wurde.

Die erfindungsgemäß als Bindemittel in den Magnetschichten verwandten Polyurethane haben in allgemeinen eine Härte nach DIN 53 517 von 18 bis 35 s. Sie haben ferner einen E-Modul (Elastizitätsmodul gemäß DIN 53 457) im Bereich von 25 bis 35 N/mm², eine Reißdehnung zwischen 1 050 und 1 250% (DIN 53 455) und eine Reißfestigkeit zwischen 75 und 95 N/mm² (DIN 53 455). Der Erweichungspunkt liegt zwischen 125 und 145°C.

Als Polyesterole mit einem Molekulargewicht von 700 bis 2 500 kommen zweckmäßigerweise überwiegend lineare Polymere mit endständigen OH-Gruppen, bevorzugt solche mit 2 OH-Endgruppen, in Frage. Die Säurezahl der Polyesterole ist kleiner als 10 und vorzugsweise kleiner als 3. Die Polyesterole lassen sich in einfacher Weise durch Veresterung von aliphatischen Dicarbonsäuren mit 4 bis 12 C-Atomen, vorzugsweise 4 bis 6 C-Atomen, mit aliphatischen Glykolen, bevorzugt Glykolen mit 2 bis 12 C-Atomen oder durch Polymerisation von cyclischen Lactonen mit 3 bis 6 C-Atomen herstellen.

Als aliphatische Dicarbonsäuren kommen beispielsweise in Betracht: Glutarsäure, Pimelinsäure, Korksäure, Sebacinsäure, Dodecandisäure und vorzugsweise Adipinsäure und Bernsteinsäure. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureester mit 1 bis 4 Kohlenstoffatomen im Alkoholrest, Carbonsäureanhydride oder Carbonsäurechloride zu verwenden.

Beispiele für Glykole sind: Diäthylenglykol, Pentandiol, Decandiol und 2,2,4-Trimethylpentandiol-1,5. Vorzugsweise verwendet werden Butandiol-1,4, Hexandiol-1,6 und 2,2-Dimethylpropandiol-1,3. Je nach den gewünschten Eigenschaften der Polyurethane können die Polyole allein oder als Mischungen in verschiedenen Mengen verwendet werden. Als cyclische Lactone für die Herstellung der

Polyesterole seien genannt: $\alpha,\alpha'$-Dimethyl-$\beta$-propiolacton, Butyrolacton und vorzugsweise Caprolacton.

Es ist ein ausschlaggebendes Kennzeichen der erfindungsgemäß verwendeten Polyurethane, daß bei ihrer Herstellung als Kettenverlängerer geradkettige aliphatische Diole und zur Erzielung einer leichten Quervernetzung Triole mitverwendet werden.

Als aliphatische geradkettige Diole (Komponente B) werden Verbindungen mit 2 bis 10 C-Atomen, vorzugsweise 2 bis 4 C-Atomen eingesetzt. Als Beispiele hierfür seien genannt: Äthandiol-1,2, Propandiol-1,3, Butandiol-1,4.

Als Triole (Komponente C) werden Verbindungen mit 3 bis 10, vorzugsweise 3 bis 6 C-Atomen angewandt. Als Beispiele für entsprechende Triole seien Glycerin, Trimethylolpropan und Hexantriol genannt. Das Vorhandensein von Triolen bei der Polyaddition führt zu einer leichten Quervernetzung des Endproduktes, was sich, sofern keine örtliche Übervernetzung auftritt, positiv auf die mechanischen Eigenschaften des Polyurethans und des daraus hergestellten Schichtmagnetogrammträgers auswirkt. Um örtliche Übervernetzung und das damit verbundene Auftreten von Quellkörpern zu vermeiden, ist es von ausschlaggebender Bedeutung, die Polyadditionsreaktion in Lösung auszuführen.

Als Diisocyanate mit 6 bis 30 C-Atomen (Komponente D) für die Herstellung der erfindungsgemäß verwendeten Bindemittel, die mit den Polyesterolen (Komponente A), den Diolen (Komponente B) und den Triolen (Komponente C) reagieren, eignen sich besonders aromatische Diisocyanate und von diesen sehr gut solche der Formel

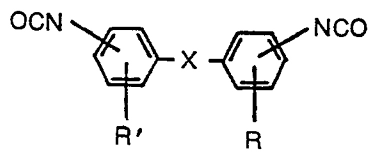

in der X = $CH_2$ oder $SO_2$ und R und R′ ein Wasserstoffatom, ein Chloratom oder eine Alkylgruppe mit 1 bis 4 C-Atomen bedeuten, wobei die Reste R und R′ gleich oder verschieden sein können.

Aromatische Diisocyanate der genannten Art sind beispielsweise Dichlor-diphenylmethandissocyanat, Dimethyl-diphenylmethan-diisocyanat, 4,4′-, 4,2′- und 2,2′-Diisocyanato-diphenylmethane und die entsprechenden Isomerengemische und Diisocyanato-diphenylsulfon. Ausgezeichnete Produkte werden mit 4,4′-Diisocyanato-diphenylmethan erhalten, so daß dieses aromatische Diisocyanat bevorzugt für die Herstellung der erfindungsgemäß verwendeten Polyurethan verwendet wird.

Das Verhältnis der Komponenten A bis D kann von 1,35 bis 1,7 Mol Diisocyanat je Mol Polyesterol bei Verwendung von 0,3 bis 3 Mol des geradkettigen aliphatischen Diols mit 2 bis 10 C-Atomen und 0,05 bis 0,4 Mol Triol variiert werden, wobei die Menge des verwendeten geradkettigen Diols teilweise von dem Molekulargewicht des verwendeten Polyesterols abhängt. Die Menge des angewandten Isocyanats sollte im wesentlichen chemisch äquivalent den Mengen der hydroxylgruppenhaltigen Verbindungen sein, so daß am Ende der Reaktion praktisch kein freies, nicht umgesetztes Isocyanat und keine freien, nicht umgesetzten Hydroxylgruppen verbleiben. Aus praktischen Gründen kann es jedoch zweckmäßig sein, einen Diisocyanatüberschuß von bis zu 6% über der zur vollständigen Umsetzung der Reaktionsteilnehmer erforderlichen Menge zu verwenden, so daß das Verhältnis der Zahl der eingesetzten Hydroxylgruppen zur Zahl der Isocyanatgruppen in der Reaktionsmischung ungefähr 0,98:1 bis 1:1,06, vorzugsweise ungefähr 1,02 bis 1,05 beträgt.

Zur Herstellung von Polyurethanen der genannten Art mit sehr vorteilhaften Gebrauchseigenschaften als Bindemittel für magnetische Aufzeichnungsträger werden je Mol Polyesterol mit einem Molekulargewicht von 700 bis 2 500, vorzugsweise 1 bis 2 Mol Butandiol-1,4, 0,05 bis 0,3 Mol Trimethylolpropan und 2 bis 3 Mol Diphenylmethandiisocyanat verwendet.

Die erfindungsgemäß verwendeten thermoplastischen, elastischen Polyurethane werden in Lösung nach dem One-Shot-oder Präpolymerverfahren, gegebenenfalls in Gegenwart von Katalysatoren und anderen Hilfsmitteln und/oder Zusatzstoffen, beispielsweise von Dibutylzinndilaurat oder Triäthylendiamin im Lösungsmittelfahren hergestellt. Diese Produkte nach dem lösungsmittelfreien Batch-Verfahren herzustellen, ist nicht möglich, da sich aufgrung der Anwensenheit des Triols bei der Substanzpolyaddition zumindest teilweise Gel-Teilchen bilden. Allgemein wird bei der Lösungspolyaddition die Gefahr einer örtlichen Übervernetzung, wie sie bei der Substanzpolyaddition auftritt, vermeiden.

Als Lösungsmittel für die Herstellung der Polyurethane werden vorzugsweise cyclische Äther, wie Tetrahydrofuran und Dioxan und cyclische Ketone, wie Cyclohexanon, verwendet. Selbstverständlich können die Polyurethane auch in anderen stark polaren Lösungsmitteln, wie Dimethylformamid, Pyrrolidon, Dimethylsulfoxid oder Äthylenglykolacetat gelöst werden. Ebenso ist es möglich, die genannten Lösungsmittel mit Aromaten, wie Toluol oder Xylol und Estern,wie Äthyl- oder Butylacetat, zu mischen.

Als geeignete Katalysatoren zur Herstellung der Polyurethane seien beispielsweise genannt: tert. Amine, wie Triäthylamin, Triäthylendiamin, N-Methyl-pyridin und N-Methyl-morpholin, Metallsalze, wie Kaliumacetat und Zinkstearat und organische Metallverbindungen, wie Dibutylzinndilaurat. Die geeignete Katalysatormenge ist abhängig von der Wirksamkeit des in Frage kommenden Katalysators. Im

allgemeinen hat es sich als zweckmäßig erwiesen, 0,005 bis 0,3 Gewichtsteile, vorzugsweise 0,01 bis 0,1 Gewichtsteile für jeweils 100 Gewichtsteile an aromatischem Diisocyanat zu verwenden.

Die erfindungsgemäß als Magnetschichtbindemittel verwendeten thermoplastischen und elastischen Polyurethan werden im einzelnen auf folgende Weise hergestellt:

Beim One-Shot-Verfahren werden die Ausgangskomponenten in einem Teil des Lösungsmittels gelöst, so daß die Lösungen mit einem Feststoffgehalt von 30 bis 50 Gewichtsprozent gebildet werden. Anschließend werden die Lösungen unter Rühren auf Temperaturen von 20 bis 90°C, vorzugsweise von 30 bis 70°C erwärmt. Die Komponenten werden bis zur gewünschten Endviskosität umgesetzt, anschließend wird auf die gewünschte Endkonzentration verdünnt, gleichzeitig wird die Polyadditionsreaktion durch Zugabe von Monoalkoholen wie Methanol, Äthanol, sekundäres Propanol, sek. Butanol oder sek, Aminen wie Dimethylamin, Äthylpropylamin, Dibutylamin und so weiter abgestoppt. Beim Präpolymerverfahren werden das Polyisocyanat, das Polyester-ol und gegebenenfalls der Katalysator und die Hilfs- und Zusatzstoffe in einem Teil des Lösungsmittels bei Temperaturen von 20 bis 90°C, vorzugsweise 30 bis 70°C zu isocyanatgruppenhaltigen Präpolymeren umgesetzt, Nach einer Reaktionszeit von 0,5 bis 2 Stunden wird das Diol und das Triol in 0,5 bis 3 Stunden der Reaktionsmischung zugesetzt. Der weitere Reaktionsablauf erfolgt entsprechend den Angaben des One-Shot-Verfahrens. Die auf diese Weise erhaltenen Polyurethanlösungen besitzen Feststoffgehalte zwischen 5 und 25 Gewichtsprozent, vorzugsweise zwischen 10 und 20 Gewichtsprozent.

Der K-Wert nach H. Fikentscher (Cellulose-Chemie *30* (1931), S. 58 ff.) geeigneter Polyurethan-Produkte liegt im Bereich von 55 bis 75 und bevorzugt bei 60 bis 70.

Die weitere Verarbeitung der Lösung des Polyurethanelastomer-Bindemittels mit Magnetpigment und Hilfsstoffen zu magnetischen Aufzeichnungsträgern kann in an sich bekannter Weise erfolgen.

Als Magnetpigmente können die an sich bekannten verwendet werden, die die Eigenschaften der resultierenden Magnetschichten natürlich mitbestimmen. Als geeignete Magnetpigmente seien beispielhaft genannt: Gamma-Eisen(III)-oxid, feinteiliger Magnetit, ferromagnetisches undotiertes oder dotiertes Chromdioxid, kobaltdotiertes Gamma-Eisen(III)-oxid sowie ferromagnetische Metalle und Metallegierungspigmente, wie Legierungen aus Eisen und Kobalt (z.B. hergestellt nach den Angaben in der deutschen Patentschrift 1 247 026). Bevorzugte Magnetpigmente sind nadelförmiges Gamma-Eisen(III)-oxid sowie ferromagnetisches Chromdioxid. Die Teilchengröße beträgt im allgemeinen 0,2 bis 2 $\mu$m, bevorzugt ist der Bereich von 0,3 bis 0,8 $\mu$m.

In an sich bekannter Weise können die Magnetschichten ferner in kleinen Mengen Zusätze wie Dispergiermittel und/oder Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodenstystems der Elemente, amphotere Elektrolyte, wie Lecithin sowie Fettsäureester oder Wachse, Siliconöle, Ruß usw., Die Menge der Zusätze ist die an sich übliche. Sie liegt im allgemeinen unter 10 Gewichts prozent, bezogen auf die Magnetschicht.

Die erfindungsgemäß verwendeten Polyurethane lassen sich als alleinige Bindemittel für die Herstellung von Magnetschichten verwenden, es ist jedoch für spezielle Anwendungszwecke bei magnetischen Aufzeichnungsträgern gemäß der Erfindung vorteilhaft, eine zweite Bindemittelkomponente in Mengen von 10 bis 50 Gewichtsteilen, vorzugsweise von 20 bis 40 Gewichsteilen, bezogen auf die resultierende Gesamtbindemittelmenge, zuzusetzen. Geeignet als weitere Bindemittel sind insbesondere weitgehend mit dem Polyurethanbindemittel verträgliche Vinylchloridpolymere, Phenoxyharze, bevorzugt solche aus Epichlorhydrin und Bisphenol A hergestellt Polykondensate und Polyvinylformalbindemittel..

Das Verhältnis von Magnetpigment zu Bindemittel in den erfindungsgemäßen Aufzeichnungsmaterialien liegt im allgemeinen zwischen 1 bis 10 und insbesondere 4 bis 6 Gewichtsteilen Magnetpigment zu einem Gewichtsteil des Bindemittels bzw. Bindemittelgemisches. Es ist ein besonderer Vorteil der erfindungsgemäßen Mischung, daß aufgrund des vorzüglichen Pigmentbindevermögens der Polyurethane hohe Magnetpigmentkonzentrationen in den Magnetschichten möglich sind, ohne daß die mechanisch-elastischen Eingenschaften verschlechtert werden oder die Anwendungseingenschaften merklich in Mitleidenschaft gezogen werden.

Als nichtmagnetische und nichtmagnetisierbare Träger lassen sich die üblichen starren oderflexiblen Trägermaterialien verwenden, insbesondere Folien aus linearem Polyester, wie Polyäthylenterephthalat, im allgemeinen in Stärken von 4 bis 200 $\mu$m und insbesondere von 10 bis 36 $\mu$m. In neuerer Zeit ist auch die Anwendung von Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z.B. einer Topfkugelmühle oder einer Rührwerksmühle, aus dem Magnetpigment und einer Lösung des bzw. der Bindemittel unter Zusatz von Dispergiermitteln und anderen Zusätzen hergestellte Magnetpigmentdispersion filtriert und mit der üblichen Beschichtungsmaschine, z.B. mittels eines Linealgießers, auf den nicht magnetischen Träger aufgetragen. In der Regel erfolgt eine magnetische Ausrichtung, bevor die flüssige Beschichtungsmischung auf dem Träger getrocknet wird; letzteres geschieht zweckmäßigerweise während 2 bis 5 Minuten bei Temperaturen von 50 bis 90°C.

Durch Zumischen von Polyisocyanat, vorzugsweise von Di- oder Triisocyanaten, wie 4,4'-Diisocyanato-diphenylmethan oder einem Triisocyanat aus 3 Mol eines Diisocyanats, wie Toluylendiisocyanat oder 4,4'-Diisocyanatodiphenylmethan und 1 Mol eines Triols, wie Glycerin oder 1,1,1-Trimethylolpropan, insbesondere dem Reaktionsprodukt aus 3 Mol Toluylendiisocyanat und 1 Mol 1,1,1-Trimethylolpropan, bevorzugt zur fertigen Magnetdispersion vor dem Auftragen auf den Träger, können die mechanischen Eigenschaften der erfindungsgemäß hergestellten Magnetschichten bei Verringerung der Thermoplastizität in ihrer Abriebfestigkeit noch weiter verbessert werden. Die Menge der dafür zugesetzten Polyisocyanate beträgt im allgemeinen etwa 1 bis 15 Gewichtsprozent, bezogen auf die Gesamtmenge des Bindemittels.

Werden Bindemittel oder Bindemittelmischungen verwendet, denen vor dem oder beim Auftragen der Magnetdispersion auf die Träger noch reaktive Polyisocyante zugesetzt wurden, so ist auch dann im Unterschied zu manchen bekannten Polyisocyanat-Bindemitteln eine Wärmebehandlung nach der Beschichtung, die über die normale physikalische Trocknung hinausgeht (z.B. eine Temperung) nicht erforderlich.

Die Magnetschichten können auf üblichen Maschinen durch Hindurchführen zwischen geheizten und polierten Walzen, gegebenenfalls bei Anwendung von Druck und Temperaturen von 50 bis 100°C, vorzugsweise 60 bis 80°C, geglättet und verdichtet werden. Die Dicke der Magnetschicht beträgt im allgemeinen 3 bis 20 $\mu$m, vorzugsweise 8 bis 15 $\mu$m. Im Falle der Herstellung von flexiblen Magnetbändern werden die beschichteten Folien in der Längsrichtung in den üblichen, meist nach Zoll festgelegten Breiten geschnitten.

Diese erfindungsgemäßen magnetischen Aufzeichnungsträger besitzen gegenüber solchen, welche mit dem Stand der Technik entsprechenden Polyurethanen bzw. Polyurethanmischungen mit geeigneten härteren Lackharzkomponenten als Bindemittel hergestellt sind, eine verbesserte Homogenität der Magnetschicht und aufgrund dieser sowohl gleichmäßigen wie auch homogenen Magnetschicht ein deutlich verringertes Fehlerniveau bezüglich drop-out- und drop-in-Fehlern als auch im Hinblick auf das peak-shift-Verhalten. Ein weiterer Vorteil dieser homogenen Magnetschicht-Oberflächen ergibt sich in der geringeren Modulation. Zusätzlich kann noch die verbesserte Verschleißfestigkeit der Magnetschichten der erfindungsgemäßen magnetischen Aufzeichnungsträger hervorgehoben werden. Die genannten Verbesserungen wirken sich nicht nur bei Daten- oder Tonaufzeichnungsträgern, vorgehoben werden. Die genannten Verbesserungen wirken sich nicht nur bei Daten- oder Tonaufzeichsondern durch eine Verringerung des Störabstandes, wie durch eine größere Gleichmäßigkeit der Pegelhüllkurve auch bei Bildaufzeichnungsträgern aus.

Die in den nachstehenden Beispielen und Vergleichsversuchen genannten Teile und Prozente beziehen sich, soweit nicht anders angageben, auf das Gewicht. Volumenteile verhalten sich zu Gewichtsteilen wie Liter zu Kilogramm.

Beispiel 1

In einem beheizbaren Reaktionsgefäß von 150 000 Volumenteilen Inhalt, ausgerüstet mit Rührer und Rückflußkühler, werden 6 600 Teile eines Polyesters aus Adipinsäure und Butandiol (Molekulargewicht 1 100), 730 Teile Butandiol, 80 Tiele Trimethylolpropan, 3 862 Teile Diphenylmethan-4,4'-Diisocyanat in 26 000 Teilen Tetrahydrofuran gelöst und auf ca. 55°C erwärmt. Die Komponenten werden bis zu einer Endviskosität von 25 Pas umgesetzt und anschließend mit 52 900 Teilen Tetrahydrofuran auf einen Feststoffgehalt von 12,5% verdünnt. Gleichzeitig wird die Reaktion durch Zugabe von 50 Teilen Dibutylamin gestoppt. Der K-Wert des gebildeten Polymeren beträgt ca. 63, gemessen in 1% iger Lösung in Dimethylformamid.

In einer Stahkugelmühle mit einem Füllvolumen von 100 000 Volumenteilen, die mit etwa 40 Upm. betrieben wird, werden 100 000 Teile Stahlkugeln, 16 000 Teile der oben angegebenen 12,5%igen Lösung des Polyurethanelastomeren, 10 000 Teile einer 10%igen Lösung eines Polyvinylformals, 240 Teile Lecithin, 240 Teile Butylstearat, 360 Teile Farbruß und 12 000 Teile eines nadelförmigenmagnetischen Eisenoxides mit einer Koerzitivkraft von 23,5 kA/m und 4 500 Teile Tetrahydrofuran eingefüllt und 72 Stunden dispergiert. Die Magnetdispersion wird sodann unter Druck durch ein Filter mit 5 $\mu$m Porenweite filtriert. Mit einem Linealgießer wird sodann eine Polyäthylenterephthalatfolie von 75 $\mu$m Dicke mit der Magnetdispersion beschlichtet und bei Temperaturen zwischen 50 und 100° getrocknet. Nach der Trocknung trägt die Folie eine Magnetschicht von 2,7 $\mu$m Dicke. Anschließend wird in einem zweiten Durchgang die Rückseite der zunächst einseitig beschichteten Folie in der gleichen Weise beschichtet. Durch Hindurchführen zwischen beheizten Walzen (50°C, Liniendruck 200 kg/cm) wird die Magnetschicht verdichtet und geglättet. Aus der beschichteten Folie werden Kreisringe mit den für Disketten genormten Maßen ausgestanzt.

Diese Disketten werden folgenden Prüfungen unterzogen, deren Ergebnisse in Tabelle 1 aufgeführt sind:

1. Drop-out-Fehler

Zur Erkennung eines auf einem magnetischen Datenträger gespeicherten Datensignals ist es

erforderlich, daß der Abstand zwischen der Höhe des Nutzsignals und dem Grundrauschen genügend hoch ist. Fehlstellen und Inhomogenitäten auf der Oberfläche des Datenträgers führen zu einer Verminderung der Höhe des Nutzsignals, was dazu führen kann, daß eine gespeicherte Information nicht mehr gelesen werden kann. Fehler dieser Art werden als drop-out-Fehler bezeichnet. Die Messung von drop-out-Fehlern geschieht durch Beschreiben einer kreisförmigen Spur auf der Magnetscheibe mit kontinuierlichen Flußwechseln im Abstand von 2 $\mu$s. In einem anschließenden Leserdurchlauf wird geprüft, ob jeder zu einem Flußwechsel gehörige Leseimpuls eine Mindestamplitude von 50%, bezogen auf den Sollwert, besitzt. Die Ergebnisse werden aus Messungen an jeweils 20 Disketten gemittelt.

2. Peak-shift-Fehler

Neben den geschilderten drop-out-Fehlern führen bei sonst ausreichend großer Signalamplitude besonders geartete Störstellen zu Phasenfehlern, d.h. Fehlern durch örtliche und zeitliche Verschiebung der die Information tragenden Lese-Impuls-Spitzen gegenüber der normalerweise zu erwartenden Lage. Diese Verschiebung kann in einem vom Code abhängigen Bereich bei der Datenauswertung toleriert werden. Durch eine bestimmte Art von Störstellen werden aber die Lesespannungspitzen aus dem Erwartungszeitraum herausgeschoben, was zu Datenverfälschung führt. Die Anfälligkeit einer Magnetschicht gegen diese peak-shift-Fehler läßt sich als zeitliche Signalverschiebung messen. Dazu wird eine Spur mit einem gegen peak-shift empfindlichen Datenmuster (1110110) einmal beschrieben und der Abstand der Lesespannungsimpulse der letzten beiden Einsen gemessen. Dieser Abstand darf einen vom jeweils verwendeten Aufzeichnungsverfahren abhängigen Grenzwert nicht überschreiten. In der vorliegenden Messung wurde ein Sollabstand von 2 $\mu$s gewählt. Bei der MFM-Aufzeichnungsmethode darf der durch die Magnetschicht verursachte peak-shift 2,8 $\mu$s nicht überschreiten, er sollte jedoch aus Gründen der Datensicherheit möglichst nahe an 2 liegen. Beurteilt wird jeweils ein Mittelwert aus 10 Messungen.

3. Drop-in-Fehler

Die Messung der drop-in-Fehler erfolgt durch Beschreiben einer kreisförmigen Spur der Magnetscheibe mit einem Schreibstrom ohne Flußwechsel, d.h. die Spur wird mit einem Gleichfeld magnetisiert. Jede Störung der Schichthomogenität führt zu einem Lesesignal im Kopf, die, wenn das Lesesignal 20% der Soll-Lesespannung übersteigt, als Fehler definiert wird. Es wird jeweils ein Mittelwert aus 10 Einzelmessungen gebildet.

4. Modulation

Die Aufzeichnung auf den rotierenden Scheiben erfolgt in kreisförmigen konzentrischen Bahnen. Der Kopf wird über 76 Spuren positioniert, die Scheibe rotiert mit 360 U/min. Gemessen wird die kurzwellige Modulation, d.h. Schwankungen der Lesespannungsamplitude um den Mittelwert im Verlauf einer Umdrehung nach ECMA/TC-19/76/27, Paragraph 5.2.1.6.

5. Verschließfestigkeit

Zur Messung der Verschleißfestigkeit wird der scheibenförmige Aufzeichnungsträger auf einer mit 720 U/min rotierenden Unterlage aufgelegt und mit feststehenden Gewichten von 80 g und definierter Auflagefläche belastet. Als Lebensdauer wird die Anzahl der Minuten bis zum ersten permanenten Fehler angegeben.

Beispiel 2

In einem beheizbaren Reaktionsgefäß von 150 000 Volumenteilen Inhalt, ausgerüstet mit Rührer und Rückflußkühler werden 6 600 Teile eines Polyesters aus Adipinsäure und Butandiol (Molekulargewicht 1 100), 920 Teile Propandiol, 60 Teile Glyzerin und 4 953 Teile Diphenylmethan-4,4'-Diisocyanat in 28 720 Teilen Tetrahydrofuran gelöst und auf ca. 55° erwärmt. Die Komponenten werden bis zu einer Endviskosität von ca. 28 Pas umgesetzt und anschließend mit 59 510 Teilen Tetrahydrofuran auf einen Feststoffgehalt von 12,5% verdünnt. Gleichzeitig wird die Reaktion durch Zugabe von 50 Teilen Isopropanol gestoppt. Der K-Wert des gebildeten Polymeren beträgt ca. 63, gemessen in 1 prozentiger Lösung in Dimethylformamid.

In einer Stahlkugelmühle mit einem Füllvolumen von 100 000 Volumenteilen, die mit etwa 40 Upm betrieben wird, werden 100 000 Teile Stahlkugeln, 24 000 Teile der oben angegebenen 12,5%igen Lösung des Polyurethanelastomeren, 240 Teile Lecithin, 240 Teile Butylstearat, 6 500 Teile Tetrahydrofuran, 360 Teilen Farbruß und 12 000 Teile eines nadelförmigen magnetischen Eisenoxids mit einer Koerzitivkraft von 23,5 kA/m eingefüllt und etwa 72 Stunden dispergiert. Nach Beendigung der Dispergierung werden der Magnetdispersion 660 Teile eines Additionsproduktes aus Toluylendiisocyanat und Trimethylolpropan zugesetzt. Die weitere Verarbeitung und die Prüfung der resultierenden Disketten erfolgt wie in Beispiel 1 angegeben. Die Meßwerte sind in Tabelle 1 angegeben.

Beispiel 3

In einem beheizbaren Reaktionsgefäß von 150 000 Volumenteilen Inhalt, ausgerüstet mit Rührer und Rückflußkühler werden 4 980 Teile Polycaprolacton mit einem Molekulargewicht von 830, 1 100

Teile Butandiol, 95 Teile Trimethylolpropan, 5 060 Teile Diphenylmethan-4,4'-Diisocyanat in 25 700 Teilen Tetrahydrofuran gelöst und auf ca. 55° erwärmt. Die Komponenten werden bis zu einer Endviskosität von ca. 20 Pas umgesetzt und anschließend mit 52 300 Teilen Tetrahydrofuran auf einen Feststoffgehalt von 12,5% verdünnt. Gleichzeitig wird die Reaktion durch Zugabe von 50 Teilen Methanol gestoppt. Der K-Wert des gebildeten Polymeren beträgt ca. 61, gemessen in 1%iger Lösung in Dimethylformamid.

In einer Stahlkugelmühle mit einem Füllvolumen von 100 000 Volumenteile, die mit etwa 40 Upm betrieben wird, werden 100 000 Teile Stahlkugeln, 19 200 Teile der oben angegebenen 12,5%igen Lösung des Polyurethanelastomeren, 3 000 Teile einer 20%igen Lösung eines Epoxyharzes, hergestellt aus Epichlorhydrin und Bisphenol A, 240 Teile Lecithin, 240 Teile Butylstearat, 360 Teile Farbruß und 12 000 Teile eines nadelförmigen magnetischen Eisenoxides mit einer Koerzitivkraft von 23,5 kA/m und 7 200 Teile Tetryhdrofuran eingefüllt und etwa 72 Stunden dispergiert. Die weitere Verarbeitung der Dispersion erfolgt wie unter Beispiel 1 angegeben. Die Prüfung erfolgt wie bei Beispiel 1 beschrieben, die Testergebnisse der resultierenden Disketten sind in Tabelle 1 zusammengefaßt.

Vergleichsversuch A

Für Vergleichsversuch A wird ein elastomeres Polyesterurethan gemäß Beispiel 3 der DE—A 2 442 762 durch Umsetzung eines Polyesterdiols mit Isocyanat unter Verwendung eines verzweigtkettigen Kettenverlängerers hergestellt.

In einer Stahlkugelmühle mit einem Füllvolumen von 100 000 Volumenteilen, die mit etwa 40 Upm betrieben wird, werden 100 000 Teile Stahlkugeln, 15 000 Teile dieses Polyesterurethans als 20%ige Lösung in Tetrahydrofuran, 360 Teile Farbruß, 240 Teile Lecithin, 12 000 Teile eines nadelförmigen, magnetischen Eisenoxids mit einer Koerzitivkraft von 23,5 kA/m und 14 400 Teile Tetrahydrofuran eingefüllt und etwa 72 Stunden dispergiert. Die weitere Verarbeitung erfolgte wie in Beispiel 1 beschrieben, ebenso die Prüfung. Die Ergebnisse sind in Tabelle 1 angegeben.

Vergleichsversuch B

Für Vergleichsversuch B wurde die Mischung von einem nach dem Verfahren der Schmelzpolyaddition hergestellten Polyesterurethan (gemäß DE—A 12 82 700) mit einem Phenoxyharz gemäß DE—A 12 95 011 als Bindemittel verwendet. In einer Stahlkugelmühle mit einem Füllvolumen von 100 000 Volumenteilen, die mit etwa 40 Upm betrieben wird, werden 100 000 Teile Stahlkugeln, 14 000 Teile einer 15%igen Lösung des elastomeren Polyurethans gemäß DE—AS 12 82 700 in Tetrahydrofuran, 3 500 Teile einer 20%igen Lösung des Phenoxyharzes, hergestellt aus Epichlorhydrin und Bisphenol A in Tetrahydrofuran, 360 Teile Farbruß, 240 Teile Lecithin, 240 Teile Butylstearat, 12 000 Teile eines nadelförmigen, magnetischen Eisenoxides mit einer Koerzitivkraft von 23,5 kA/m und 12 000 Teilen Tetrahydrofuran eingefüllt und etwa 72 Stunden dispergiert. Die weitere Verarbeitung der Magnetdispersion erfolgte sodann wie unter Beispiel 1 beschrieben. Die Zusammensetzung der Testergebnisse der resultierenden Disketten ist in Tabelle 1 enthalten.

Vergleichsversuch C

In einer Stahlkugelmühle mit einem Füllvolumen von 100 000 Volumenteilen, die mit etwa 40 Upm betrieben wird, werden 100 000 Teile Stahlkugeln, 14 000 Teile einer 15%igen Lösung eines Polyurethanelastomeren nac DA 1 282 700, 10 500 Teile einer 10%igen Lösung eines Polyvinylformales in Tetrahydrofuran, 366 Teile Farbruß, 240 Teile Lecithin, 240 Teile Butylstearat, 12 000 Teile eines nadelförmigen, magnetischen Eisenoxidpigmentes mit einer Koerzitivkraft von 23,5 kA/m und 5 000 Teile Tetrahydrofuran eingefüllt und etwa 72 Stunden dispergiert. Die weitere Verarbeitung der Dispersion erfolgt sodann wie unter Beispiel 1 beschrieben. Die Meßergebnisse der resultierenden Disketten sind in Tabelle 1 angegeben.

Beispiel 4

In einer Stahlkugelmühle mit einem Füllvolumen von 100 000 Volumenteilen, die mit etwa 40 Umdrehungen pro Minute betrieben wird, werden 100 000 Teile Stahlkugeln, 16 000 Teile der in Beispiel 1 angegebenen 12,5%igen Lösung des Polyurethanelastomeren, 10 000 Teile einer 10%igen Lösung eines Polyvinylformals, bestehend aus 82 Prozent Vinylformal-, 12 Prozent Vinylacetat- und 6 Prozent Vinylalkoholeinheiten, 270 Teile Zinkoleat, 270 Teile Butylstearat und 13 500 Teile eines ferromagnetischen Chromdioxidpigmentes mit einer mittleren Teilchengröße von 0,5 $\mu$m und einem Verhältnis von Länge zu Dicke von 4:1 bis 9:1 und 4 500 Teile Tetrahydrofuran eingefüllt und etwa 120 Stunden dispergiert. Die Magnetdispersion wird sodann unter Druck durch ein Filter von 5 $\mu$m Porenweite filtriert. Mit einem Linealgießer wird nach der üblichen Technik eine 20 $\mu$m starke Polyäthylenterephthalatfolie mit der Magnetdispersion beschichtet und nach Durchlaufen eines Magnetfeldes die Beschichtung bei Temperaturen zwischen 60 und 100°C getrocknet. Durch Hindurchführen zwischen beheizten Walzen (70°C, Liniendruck 200 kg/cm) wird die Magnetschicht verdichtet und geglättet. Die resultierende Dicke beträgt 5,0 $\mu$m. Die beschichtete Folie wird anschließend in Bänder von 1 Zoll Breite geschnitten.

Auf einem handelsüblichen 1-Zoll-Videorecorder werden folgende Prüfungen durchgeführt:

1. Störabstand S/N

Der Störabstand (Signal-Rauschabstand) ist das Verhältnis des Effektivwertes des Störsignals zum Bildsignal (BA-Signal), gemessen in Dezibel.

2. Fehlerzahl

Als Bandfehler wird ein Pegelabfall des HF-Videosignals um mehr als 20 dB für mehr als 20 $\mu$s Dauer definiert. Die Fehlerzahl wird pro Minute angegeben.

3. Abriebfestigkeit

Die Prüfung der Abriebfestigkeit erfolgte bei 1 Zoll breiten Bändern auf einem handelsüblichen 1-Zoll-Recorder. An den Enden eines 1,3 m langen Bandstückes werden Schaltmarken aufgeklebt, welche dann jeweils eine Reversierung nach einer Periode von 60 Sekunden auslösen. Die Vorschubgeschwindigkeit des Laufwerkes beträgt 21 cm/s. Geprüft wird die Anzahl der möglichen Reversierungen bis ein Pegelainbruch erfolgt.

Die Ergebnisse sind in Tabelle 2 aufgeführt.

Vergleichsversuch D

Es wird wie in Beispiel 4 verfahren, jedoch werden anstelle des erfindungsgemäßen Polyurethanelastomeren 16 000 Teile einer 12,5%igen Lösung eines solchen gemäß Beispiel 3 der DE—A 24 42 762 hergestellten Polyurethanelastomeren in Tetrahydrofuran eingesetzt. Die Verarbeitung erfolgte wie in Beispiel 4 beschrieben. Die Prüfergenbisse sind Tabelle 2 zu entnehmen.

Vergleichsversuch E

Es wird wie in Beispiel 4 verfahren, jedoch wurden hier anstelle des erfindungsgemäßen Polyurethanelastomeren 16 000 Teile einer 12,5%igen Lösung eines gemäß DE—A 12 95 011 nach dem Schmelzpolyadditionsverfahren hergestellten Polyesterurethans in Tetrahydrofuran eingesetzt. Die Verarbeitung erfolgte wie in Beispiel 4 beschrieben. Die Prüfergebnisse sind Tabelle 2 zu entnehmen.

TABELLE 1

| | Beispiel 1 | Beispiel 2 | Beispiel 3 | Vergleichsversuch | | |
|---|---|---|---|---|---|---|
| | | | | A | B | C |
| Drop-out-Fehler | 1 | 7 | 4 | 11 | 17 | 10 |
| Peak-shift | 2,16 | 2,45 | 2,39 | 2,65 | 2,84 | 2,71 |
| Drop-in-Fehler | 21 | 17 | 31 | 51 | 46 | 37 |
| Modulation | 4% | 4% | 5% | 8% | 11% | 9% |
| Verschleißfestigkeit | >150 | >150 | 145 | 90 | 85 | 110 |

TABELLE 2

| | Video S/N-Verhältnis | Fehlerzahl pro Minute | Abriebfestigkeit |
|---|---|---|---|
| Beispiel 4 | + 3 | 4 | 800 |
| Vgl. Vers. D | + 1,5 | 8 | 500 |
| Vgl. Vers. E | 0 | 11 | 400 |

## Patentansprüche

1. Magnetischer Aufzeichnungsträger aus einem nichtmagnetischen Trägermaterial, das mit einer Magnetschicht auf der Basis von in einem mindestens zu 50 Gew.-% aus einem thermoplastischen durch Polyaddition eines Polyesterols, eines aliphatischen Diols, eines Polyols und eines Diisocyanats in einem mit Isocyanatgruppen nicht reagierenden organischen Lösungsmittel erhaltenen Polyurethan bestehenden Bindemittel dispergierten feinteiligen Magnetpigment versehen ist, dadurch gekennzeichnet, daß das Polyurethan ein in Tetrahydrofuran lösliches, isocyanatgruppenfreies thermoplastisches Polyurethan darstellt, welches aus den Komponenten

A. 1 Mol eines Polyesterols mit einem Molekulargewicht zwischen 700 und 2500,

B. 0,3 bis 3 Mol eines geradkettigen aliphatischen Diols mit 2 bis 10 Kohlenstoffatomen,

C. 0,05 bis 0,4 Mol eines Triols mit 3 bis 10 Kohlenstoffatomen und

D. 1,35 bis 4,7 Mol eines Diisocyanats mit 6 bis 30 Kohlenstoffatomen, wobei die Menge an NCO-Gruppen etwa äquivalent der Menge an OH-Gruppen der Summe der Komponenten A bis C ist, hergestellt wurde.

2. Magnetische Aufzeichnungsträger gemäß Anspruch 1, dadurch gekennzeichnet, daß die Polyurethane einen Erweichungspunkt zwischen 125 und 145°C und eine Härte (nach DIN 53 157) im Bereich von 18 bis 35 aufweisen.

3. Magnetische Aufzeichnungsträger gemäß Anspruch 1, dadurch gekennzeichnet, daß sie die genannten Polyurethane als alleiniges Bindemittel enthalten.

## Revendications

1. Supports d'enregistrement magnétique en une matière-support non magnétique, munie d'une couche magnétique à base de pigment magnétique finement divisé, dispersé, dans un liant constitué, au moins pour 50% en poids, d'un polyuréthane thermoplastique, obtenu par polyaddition d'un polyesterol d'un diol aliphatique, d'un polyol et d'un diisocyanate, dans un solvant organique ne réagissant pas avec des groupes isocyanate, caractérisés par le fait que le polyuréthane représente un polyuréthane thermoplastique, sans groupes isocyanate, soluble dans le tétrahydrofurane, et qui a été préparé à partir des composants:

A. 1 mole d'un polyesterol d'un poids moléculaire compris entre 700 et 2 500,

B. 0,3 à 3 moles d'un diol aliphatique à chaîne linéaire et à 2 à 10 atomes de carbone,

C. 0,05 à 0,4 mole d'un triol à 3 à 10 atomes de carbone, et

D. 1,35 à 4,7 moles d'un diisocyanate à 6 à 30 atomes de carbone, la quantité de groupes NCO étant à peu près équivalente à la quantité de groupes OH de la somme des composants A à C.

2. Supports d'enregistrement magnétique selon la revendication 1, caractérisés par le fait que les polyuréthanes ont un point de ramollissement compris entre 125 et 145°C et une dureté (selon DIN 53157) dans la zone de 18 à 35.

3. Supports d'enregistrement magnétique selon la revendication 1, caractérisés par le fait qu'ils contiennent les dits polyuréthanes comme unique liant.

## Claims

1. A magnetic recording medium comprising a non-magnetic base which is provided with a magnetic coating based on a finely divided magnetic pigment dispersed in a binder which contains at least 50 percent by weight of a thermoplastic polyurethane obtained by polyaddition of a hydroxyl-containing polyester, an aliphatic diol, a polyol and a diisocyanate in an organic solvent which does not react with isocyanate groups, characterized in that the polyurethane is a thermoplastic polyurethane which is soluble in tetrahydrofuran, is free from isocyanate groups and has been produced from the components.

(A) 1 mole of a hydroxyl-containing polyester having a molecular weight of from 700 to 2,500,

(B) from 0.3 to 3 moles of a linear aliphatic diol containing from 2 to 10 carbon atoms,

(C) from 0.05 to 0.4 moles of a triol containing from 3 to 10 carbon atoms, and

(D) from 1.35 to 4.7 moles of a diisocyanate containing from 6 to 30 carbon atoms, the amount of NCO groups being approximately equivalent to the amount of OH groups of the sum of components (A) to (C).

2. A magnetic recording medium as claimed in claim 1, characterized in that the polyurethanes have a softening point of from 125 to 145°C and have a hardness (according to DIN 53,157) of from 18 to 35.

3. A magnetic recording medium as claimed in claim 1, characterized in that it contains the said polyurethanes as sole binder.